# FASCICULE DE BREVET EUROPEEN

(11) **EP 2 864 993 B1**
(45) Date de publication et mention de la délivrance du brevet: **13.04.2016**
(21) Numéro de dépôt: 13733244.1
(22) Date de dépôt: 20.06.2013
(51) Int. Cl.: H01G 11/60, H01G 11/62, H01G 11/58, H01M 10/052, H01M 10/0568, H01M 10/0569

(54) **COMPOSITION COMPRENANT UN LIQUIDE IONIQUE SPECIFIQUE**
ZUSAMMENSETZUNG MIT EINER SPEZIFISCHEN IONISCHEN FLÜSSIGKEIT
COMPOSITION COMPRISING A SPECIFIC IONIC LIQUID

(30) Priorité: 22.06.2012 FR 1255918
(43) Date de publication de la demande: 29.04.2015
(73) Titulaire: Commissariat à l'Énergie Atomique et aux Énergies Alternatives, 75015 Paris (FR); Université François Rabelais, 37041 Tours Cedex 1 (FR)
(72) Inventeur: GALIANO, Hervé, F-37700 La Ville Aux Dames (FR); ANOUTI, Mérièm, F-37550 Saint Avertin (FR); TIMPERMAN, Laure, 37320 Esvres/Indre (FR)
(74) Mandataire: Brevalex
(86) Numéro de dépôt international: PCT/EP2013/062880
(87) Numéro de publication internationale: WO 2013/190039

(56) Documents cités:
- WO-A1-2004/082059
- WO-A2-2011/029006
- FR-A1- 2 978 765
- MÉRIÈM ANOUTI ET AL: "Synthesis and Characterization of New Pyrrolidinium Based Protic Ionic Liquids. Good and Superionic Liquids", THE JOURNAL OF PHYSICAL CHEMISTRY B, vol. 112, no. 42, 23 octobre 2008 (2008-10-23), pages 13335-13343, XP055056522, ISSN: 1520-6106, DOI: 10.1021/jp805992b
- F. BEGUIN AND AL: "Pseudo-capacitance of nanoporous carbons in pyrrolidinium-based protic ionics liquids", ELECTROCHEMISTRY COMMUNICATIONS, vol. 12, 11 janvier 2010 (2010-01-11), pages 414-417, XP002694025, DOI: 10.116/j.elecom.2010.01.007
- MRIEM ANOUTI ET AL: "Protic ionic liquid as electrolyte for high-densities electrochemical double layer capacitors with activated carbon electrode material", ELECTROCHIMICA ACTA, ELSEVIER SCIENCE PUBLISHERS, BARKING, GB, vol. 64, 28 décembre 2011 (2011-12-28), pages 110-117, XP028455149, ISSN: 0013-4686, DOI: 10.1016/J.ELECTACTA.2011.12.120 [extrait le 2012-01-08]
- HAICHAO JIANG ET AL: "Volumetric and surface properties of pure ionic liquid n-octyl-pyridinium nitrate and its binary mixture with alcohol", JOURNAL OF CHEMICAL THERMODYNAMICS, ACADEMIC PRESS, LONDON, GB, vol. 47, 25 octobre 2011 (2011-10-25), pages 203-208, XP028437695, ISSN: 0021-9614, DOI: 10.1016/J.JCT.2011.10.013 [extrait le 2011-10-25]
- MERIEM ANOUTI ET AL: "Pyrrolidinium nitrate protic ionic liquid-based electrolyte for very low-temperature electrical double-layer capacitors supercapacitors", PHYSICAL CHEMISTRY CHEMICAL PHYSICS, 1 janvier 2013 (2013-01-01), XP055056525, ISSN: 1463-9076, DOI: 10.1039/c3cp44680h
- JULIE PIRES ET AL: "Density, conductivity, viscosity, and excess properties of (pyrrolidinium nitrate-based Protic Ionic Liquid+propylene carbonate) binary mixture", THE JOURNAL OF CHEMICAL THERMODYNAMICS, vol. 59, 7 décembre 2012 (2012-12-07), pages 10-19, XP055056524, ISSN: 0021-9614, DOI: 10.1016/j.jct.2012.11.020

## Description

### DOMAINE TECHNIQUE

La présente invention a trait à de nouvelles compositions résultant de l'association originale entre un liquide ionique spécifique, lui-même étant une combinaison entre un cation spécifique et un anion spécifique, et un type de solvant organique spécifique.

Ces compositions présentent d'excellentes propriétés en termes de conductivité, de viscosité, de stabilité thermique (notamment pour une large gamme de températures, par exemple, entre -60°C et +150°C).

C'est donc tout naturellement que ces compositions peuvent trouver application comme électrolytes dans des dispositifs à stockage d'énergie, tels que les supercondensateurs.

### ÉTAT DE LA TECHNIQUE ANTÉRIEURE

Il existe trois grands types de dispositifs à stockage d'énergie permettant de stocker réversiblement l'énergie électrique : les condensateurs diélectriques classiques, les accumulateurs ou générateurs électrochimiques secondaires et les supercondensateurs.

Les supercondensateurs présentent un intérêt tout particulier tant pour le domaine de l'énergie embarquée que de celui de l'énergie portable.

D'un point de vue du fonctionnement, les supercondensateurs fonctionnent sur le principe de la double couche électrochimique d'où l'appellation anglo-saxonne parfois rencontrée de « Electrochemical double layer capacitor » (connue également sous l'abréviation EDLC), soit en d'autres termes sur le principe de stockage d'énergie par distribution des ions provenant d'un électrolyte au voisinage de la surface de deux électrodes poreuses imprégnées d'électrolyte, séparées par une membrane isolante et poreuse assurant la conduction ionique.

Ainsi, une cellule de base d'un supercondensateur peut se résumer aux éléments suivants :
- une électrode positive ;
- une interface électrode positive/électrolyte formant une double couche électrique ;
- une membrane isolante et poreuse imprégnée par ledit électrolyte ;
- une électrode négative ; et
- une interface électrode négative/électrolyte formant une double couche électrique.

Du fait de l'existence de ces deux interfaces formant chacune une double couche électrochimique, un supercondensateur peut être considéré schématiquement comme l'association en série de deux condensateurs, l'un à l'électrode positive et l'autre à l'électrode négative, ces deux condensateurs étant créés par application d'un courant aux bornes du supercondensateur, ce qui crée une zone de charges aux deux interfaces électrode-électrolyte, l'énergie étant ainsi stockée de façon électrostatique et non électrochimique.

Il existe trois grands types de supercondensateurs :
- les supercondensateurs à base de carbone, qui associent classiquement deux électrodes à base de carbone activé, connus également sous l'appellation de « supercondensateurs à double couche électrochimique » et sont également qualifiés très souvent de systèmes symétriques, du fait que les électrodes positives et négatives sont identiques ;
- les supercondensateurs à base d'oxydes métalliques, fonctionnant sur le principe du stockage d'énergie par l'intermédiaire d'une réaction de protonation à la surface d'électrodes à base d'oxyde(s) de métaux nobles (par exemple, en RuO₂ et IrO₂), ce type de supercondensateurs restant dévolu à des marchés à haute valeur ajoutée, du fait des coûts induits par l'utilisation de métaux nobles ;
- les supercondensateurs, qui associent une électrode de batterie à une électrode de supercondensateur, ce qui vaut à ces supercondensateurs l'appellation de « système hybride » ou encore l'appellation de « systèmes hybrides asymétriques », du fait qu'ils comprennent deux électrodes différentes.

Il est connu que l'énergie stockée et la puissance délivrée par un supercondensateur sont fonction du carré de la tension nominale applicable, ce qui signifie, en d'autres termes, que les performances d'un supercondensateur peuvent être grandement améliorées en jouant sur l'augmentation de la tension nominale applicable aux bornes du supercondensateur.

Ainsi, la différence de potentiel maximale aux bornes du supercondensateur est conditionnée par la nature de l'électrolyte et son aptitude à rester stable dans une fenêtre électrochimique donnée. Entre autres, il s'avère également nécessaire, qu'un électrolyte tout en étant stable sur une large fenêtre électrochimique présente les caractéristiques suivantes :
- une bonne conductivité ionique ;
- une plage de température élevée ; et
- une viscosité relativement faible de sorte à permettre une bonne mobilité des ions.

Actuellement, trois types d'électrolytes sont utilisés dans les supercondensateurs :
- les électrolytes aqueux, consistant en un ou des sels dissous dans l'eau ;
- les électrolytes organiques, consistant en un ou des sels dissous dans un solvant organique ;
- les liquides ioniques consistant en un sel liquide à température ambiante.

Concernant les électrolytes aqueux, qu'ils soient acides (par exemple, une solution d'acide sulfurique) ou basiques (par exemple, une solution de potasse), le domaine de tension nominale applicable, pour des raisons de décomposition de l'eau, est limité à environ 1 V, ce qui nécessite pour atteindre des tensions classiques (par exemple, 12 V) de procéder à des agencements complexes de plusieurs unités de supercondensateur. De plus, la plage de températures accessible est limitée du fait de la faible solubilité de certains sels en milieu aqueux, ce qui ne permet pas d'utiliser ces électrolytes à des températures inférieures à -20°C.

Concernant les électrolytes organiques, ils présentent une fenêtre de stabilité électrochimique plus grande que les électrolytes aqueux. Un solvant organique couramment utilisé, pour entrer dans la constitution de ces électrolytes, est l'acétonitrile. Ce solvant est peu visqueux, dissout très bien les sels et est très dissociant.

De plus :
- il est très stable, tant dans des conditions oxydantes que réductrices ;
- il a un moment dipolaire, qui permet la solvatation des ions ; et
- il présente à la fois un nombre donneur élevé et un nombre accepteur élevé, ce qui fait qu'il peut se comporter à la fois comme un acide et une base de Lewis.

Cependant, ces électrolytes sont peu rentables, car présentant un coût élevé et l'utilisation de certains solvants organiques, dont la tension de vapeur est élevée, pose un problème environnemental sérieux, du fait qu'ils peuvent être difficilement recyclables et peuvent s'évaporer dans l'atmosphère environnante lors de leur utilisation.

Concernant les liquides ioniques, ils n'ont idéalement pas de tension de vapeur mesurable et présentent une grande stabilité thermique, ce qui induit que les problèmes environnementaux et de sécurité rencontrés avec les solvants organiques (que ce soit en termes de volatilité, d'évaporation et de risques d'inflammabilité ou d'explosion) sont éliminés avec eux.

Toutefois, les liquides ioniques peuvent présenter une viscosité importante et donc des conductivités ioniques faibles, ce qui entraîne des résistances élevées à température ambiante.

Le document Journal of Physical Chemistry B, vol.112, n°42, p.13335-13343 décrit des liquides ioniques protiques à base de cations pyrrolidiniums, ces liquides ioniques étant préparés par réaction de neutralisation entre la pyrrolidine et des acides de BrØnsted de formule HX, dans laquelle X est NO₃⁻, HSO₄⁻, HCOO⁻, CH₃COO⁻ ou CF₃COO⁻ et CH₃(CH₂)₆COO⁻. Le tableau 1 décrit plus spécifiquement un liquide ionique du type nitrate de pyrrolidinium.

Le document Electrochemistry Communications 12 (2010) 414-417 décrit les performances électrochimiques de carbones nanoporeux fonctionnalisés préalablement en présence de liquides ioniques spécifiques, qui sont respectivement le nitrate de pyrrolidinium et le formiate de pyrrolidinium, lesquels sont utilisés en l'absence de solvant ajouté.

Le document Electrochimica Acta 64 (2012) 110-117 fait état de deux liquides ioniques spécifiques : le méthanesulfonate de diisopropyléthylammonium et le méthanesulfonate de pyrrolidinium, ces liquides ioniques étant utilisés en association avec de l'eau, en vue de constituer des électrolytes pour des supercapacités.

Ainsi, que ce soient pour les électrolytes aqueux, les électrolytes organiques ou les liquides ioniques, il ressort toujours des inconvénients inhérents à la nature de ces électrolytes et il n'existe pas, à l'heure actuelle, d'électrolytes combinant à la fois des propriétés avantageuses en termes de stabilité électrochimique, conductivité ionique, stabilité à la température et viscosité.

### EXPOSÉ DE L'INVENTION

Pour combler les manques susmentionnés, les inventeurs ont mis au point une nouvelle composition, qui peut être utilisée comme électrolyte pour batteries au lithium, cette composition comprenant un liquide ionique consistant en l'association d'un cation pyrrolidinium et d'un anion nitrate et comprenant un solvant choisi parmi les solvants lactones, les solvants carbonates, les solvants nitriles et les mélanges de ceux-ci.

Le solvant lactone peut être choisi parmi la γ-butyrolactone, la β-butyrolactone, la γ-valérolactone, la δ-valérolactone et la γ-caprolactone. De préférence, ce solvant est la γ-butyrolactone.

Le solvant carbonate peut être un carbonate d'alkylène, tel que la carbonate de propylène.

Le solvant nitrile peut être un solvant nitrile comprenant une fonction nitrile, tel que l'acétonitrile et/ou un solvant nitrile comprenant deux fonctions nitriles, tel que l'adiponitrile et/ou le glutaronitrile.

Dans les compositions de l'invention, le liquide ionique susmentionné peut être présent en une quantité d'au moins 20% massique par rapport à la masse totale de la composition et peut aller jusqu'à 80% massique.

A titre d'exemple, une composition particulièrement efficace est une composition comprenant :
- un liquide ionique tel que défini ci-dessus à hauteur de 50% massique par rapport à la masse totale de la composition ; et
- de la γ-butyrolactone à hauteur de 50% massique par rapport à la masse totale de la composition.

Les compositions de l'invention présentent une conductivité élevée sur une large plage de températures.

Par exemple, pour une composition comprenant 50% massique de liquide ionique et 50% massique de γ-butyrolactone, la conductivité présente, respectivement à des températures de -10°C, 25°C et 80°C, des valeurs de 10 mS.cm⁻¹, 33 mS.cm⁻¹ et 68 mS.cm⁻¹.

Les compositions de l'invention sont également très stables sur de larges plages de températures, telles qu'une plage de températures allant de -60°C à 130°C.

Les compositions de l'invention rassemblent, ainsi, les points forts des solvants organiques susmentionnés (forte conductivité et faible viscosité) et ceux des liquides ioniques (stabilité thermique importante et tension de vapeur faible).

Les compositions de l'invention peuvent être préparées par des procédés de préparation simples à la portée de l'homme du métier.

Ainsi, les compositions peuvent être préparées selon la séquence d'étapes suivantes :
- une étape de pesée de chacun des ingrédients constitutifs de la composition (à savoir, le liquide ionique et le solvant lactone) ;
- une étape de formation de la composition par mélange desdits ingrédients.

Le liquide ionique peut être préalablement préparé par une simple réaction acido-basique selon le mécanisme de BrØnsted entre de la pyrrolidine et de l'acide nitrique.

Eu égard aux propriétés susmentionnées, les compositions de l'invention forment, du fait de la présence d'un liquide ionique, un mélange électrolytique, ce qui fait qu'elles sont particulièrement appropriées pour être utilisées comme électrolytes, en particulier, dans un dispositif à stockage d'énergie, de préférence, du type supercondensateur.

L'invention a donc trait également à un dispositif à stockage d'énergie, par exemple, du type supercondensateur, comme illustré selon un mode de réalisation particulier sur la figure unique jointe en annexe, comprenant au moins une cellule 1 comprenant une électrode positive 3 et une électrode négative 5 séparées l'une de l'autre par un séparateur 7 comprenant, comme électrolyte, un liquide ionique ou une composition conforme à l'invention.

L'électrode positive et l'électrode négative peuvent être à base de carbone, en particulier de carbone activé, auquel cas les supercondensateurs comprenant ce type d'électrodes peuvent être qualifiés de système symétrique.

L'électrode positive et l'électrode négative peuvent être également à base d'oxyde(s) métallique (s).

Les compositions conformes à l'invention forment au niveau de chaque interface électrode-séparateur une double couche électrochimique.

Les compositions conformes à l'invention présentent des performances élevées, même à des températures très basses (par exemple, pour la composition 50/50 susmentionnée, des capacités de 112 F.g⁻¹ à 25°C contre 120 F.g⁻¹ à -40°C, là ou des électrolytes classiques seraient défaillants).

Elles sont moins corrosives que des électrolytes à base d'acide sulfurique.

Elles constituent également une alternative à des électrolytes utilisant des solvants organiques volatiles, ce qui pose des problèmes environnementaux (notamment lorsque ces solvants sont émis dans l'atmosphère) et de sécurité (ces solvants présentant souvent des risques d'inflammabilité).

L'invention va à présent être décrite en référence aux exemples fournis ci-dessous donnés à titre illustratif et non limitatif.

### BRÈVE DESCRIPTION DES DESSINS

La figure 1 représente une cellule de supercondensateur conforme à l'invention.
La figure 2 est un graphique représentant l'évolution de la viscosité η (en mPa.s) en fonction de la température T (en °C) pour la composition de l'exemple 2.
La figure 3 est un graphique représentant l'évolution de la conductivité C (en mS.cm⁻¹) en fonction de la température T (en °C).
La figure 4 est un voltamogramme cyclique de la composition de l'exemple 2 en système Swagelok symétrique carbone/carbone pour différentes températures (-40, 20 et 50°C) à 5 mV/s (respectivement courbes a, b et c pour -40, 20 et 50°C).
La figure 5 est un voltamogramme cyclique de la composition de l'exemple 2 en système Swagelok symétrique carbone/carbone pour différentes vitesses de balayage (2 mV/s, 5 mV/s, 10 mV/s, 20 mV/s, 50 mV/s et 100 mV/s) (respectivement courbes a, b, c, d, e et f).
La figure 6 est un voltamogramme cyclique de la composition de l'exemple 2 en système Swagelok symétrique carbone/carbone à 5 mV/s à -40°C sur une gamme de potentiels allant de 0 à 2 V.

### EXPOSÉ DÉTAILLÉ DE MODES DE RÉALISATION PARTICULIERS

### EXEMPLE 1

Cet exemple illustre la préparation d'un liquide ionique du type nitrate de pyrrolidinium servant de base à la préparation des compositions de l'invention.

La préparation de ce liquide ionique peut être illustrée par le schéma réactionnel suivant :

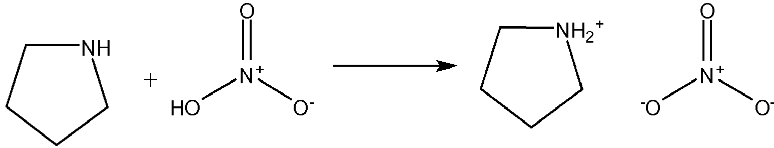

Pour ce faire, de la pyrrolidine (26,78 g ; 0,37 mol) est introduite dans un ballon tricol immergé dans un bain de glace et surmonté d'un réfrigérant. Un thermomètre est utilisé pour contrôler la température. Une solution d'acide nitrique à 68% (34,54 g ; 0,37 mol) est ajoutée goutte à goutte dans le ballon tricol au moyen d'une ampoule de coulée, cet ajout s'effectuant en maintenant une agitation vigoureuse pendant 30 minutes. La réaction acido-basique, qui s'ensuit, est une réaction exothermique. Le bain de glace susmentionnée permet de maintenir la température du milieu réactionnel à une valeur inférieure à 25°C. Une fois l'ajout terminé, l'agitation est maintenue pendant 2 heures à température ambiante, avant d'ajouter 233 g de 1,2-dichloroéthane qui va forme un hétéroazéotrope avec l'eau. Pour éliminer l'eau, le mélange est distillé sous pression normale jusqu'à atteindre la température d'ébullition de l'hétéroazéotrope susmentionnée (à savoir, 73°C). Le 1,2-dichloroéthane subsistant est finalement évaporé sous pression réduite, moyennant il subsiste un liquide transparent très visqueux. Ce liquide, correspondant au liquide ionique susmentionné, est séché sous vide, en utilisant un piège à azote liquide, pendant deux jours.

Le liquide ionique présente une conductivité de 45 mS.cm⁻¹ à 25°C et de 105 mS.cm⁻¹ à 80°C. Il présente également une viscosité voisine de 6 mPa.S à 25°C et est égale à 1,5 mPa.s à 80°C, soit une viscosité voisine de celle de l'eau.

### EXEMPLE 2

Cet exemple a trait à l'étude des propriétés physico-chimiques d'une composition conforme à l'invention, plus précisément, d'une composition comprenant 50% massique du liquide ionique préparé à l'exemple 1 et 50% massique de γ-butyrolactone.

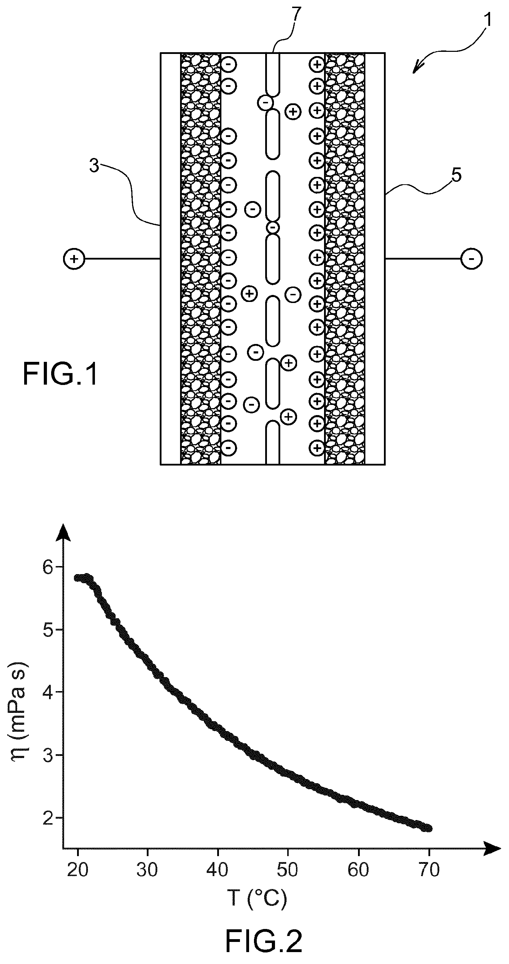

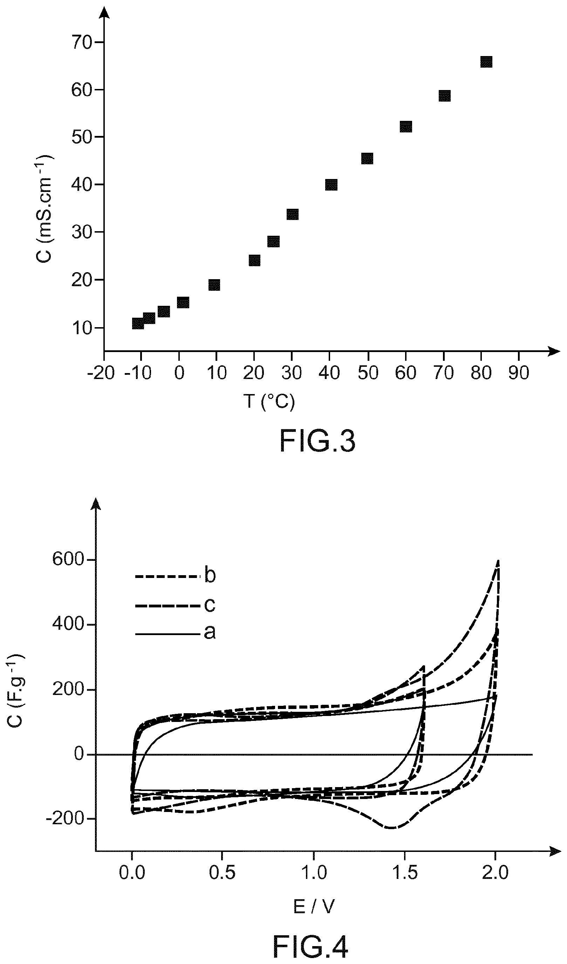

Ainsi, il a été déterminé l'évolution, en fonction de la température, de la viscosité et de la conductivité de ladite composition, les résultats étant reportés sur les figures 2 et 3 jointes en annexe.

De la figure 2, représentant l'évolution de la viscosité η (en mPa.s) en fonction de la température T (en °C), il ressort clairement que la viscosité de la composition diminue significativement, dès lors que la température augmente.

De la figure 3, représentant l'évolution de la conductivité C (en mS.cm⁻¹) en fonction de la température T (en °C), il ressort que la composition de l'invention présente des valeurs de conductivité supérieures à 10 mS.cm⁻¹ sur une plage de températures allant de -10 à 80°C.

La stabilité thermique de la composition a également été testée par calorimétrie différentielle à balayage. Il ressort qu'aucune transition n'est observée dans une plage de températures de -60 à 100°C, ce qui atteste de la stabilité de cette composition dans cette plage de températures.

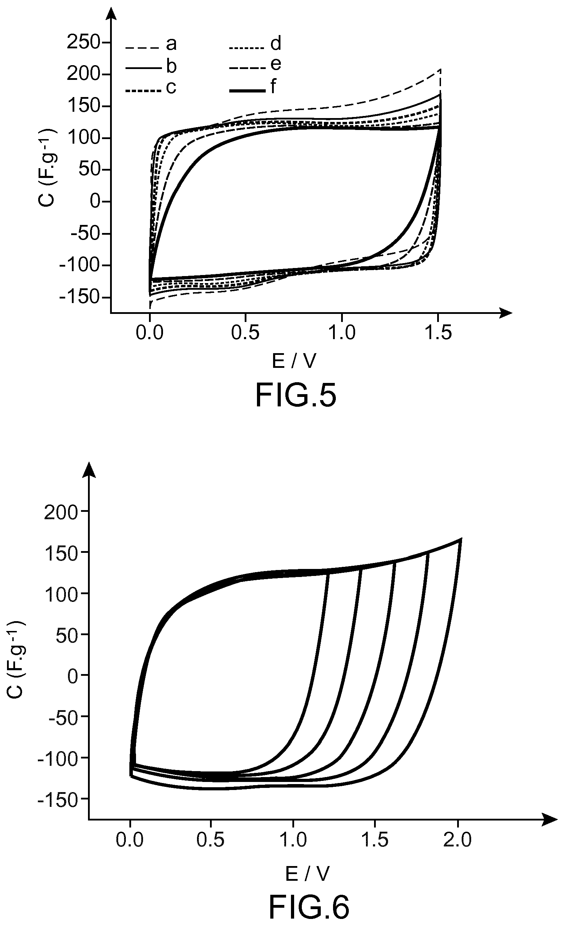

Le comportement électrochimique a également été testé, sur carbone activé commercial, par voltampérométrie cyclique à différentes températures, comme l'atteste la figure 4 consistant en un voltamogramme cyclique en système Swagelok symétrique carbone/carbone pour différentes températures (-40, 20 et 50°C) à 5 mV/s (respectivement courbes a, b et c pour -40, 20 et 50°C), et à différentes vitesses de balayage, comme l'atteste la figure 5 consistant en un voltamogramme cyclique en système Swagelok symétrique carbone/carbone pour différentes vitesses de balayage (2 mV/s, 5 mV/s, 10 mV/s, 20 mV/s, 50 mV/s et 100 mV/s) à 20°C (respectivement courbes a, b, c, d, e et f pour 2 mV/s, 5 mV/s, 10 mV/s, 20 mV/s, 50 mV/s et 100 mV/s).

La figure 4 montre notamment que la composition de l'invention n'est pas perturbée par les variations de températures. A -40°C, cette composition présente le même comportement électrochimique qu'à 20°C. Les figures 4 et 5 contribuent ainsi à dénoncer le caractère capacitif robuste de la composition de l'invention, quelques soient les sollicitations appliquées.

L'étude de la cyclabilité de la composition selon l'invention a également été réalisée à des températures extrêmes et notamment à -40°C, comme l'atteste la figure 6, consistant en un voltamogramme cyclique en système Swagelok symétrique carbone/carbone à 5 mV/s à -40°C sur une gamme de potentiels allant de 0 à 2 V. Le maintien de la cyclabilité sur cette gamme de tension de fonctionnement est remarquable à cette température et est bien supérieur aux résultats obtenus avec d'autres électrolytes aqueux et organiques.

Les capacités, déterminées en mode galvanostatiques pour différentes tensions de fonctionnement, sont reportées dans le tableau ci-dessous. Il ressort ainsi que la variation de températures de fonctionnement ne perturbe pas la composition selon l'invention.

| Composition | T (°C) | Tension de fonctionnement (E/V) | | | | | | |
|---|---|---|---|---|---|---|---|---|
| | | 0,7 | 1,0 | 1,2 | 1,4 | 1,6 | 1,8 | 2 |
| Nitrate de pyrrolidinium/γ-butyrolactone (50/50) | 50 | 105 | 106 | 107 | 112 | 121 | 135 | 153 |
| | 20 | 114 | 113 | 113 | 114 | 116 | 122 | 120 |
| | -10 | 99 | 107 | 110 | 113 | 117 | 120 | 125 |

## Revendications

1. Composition comprenant un liquide ionique consistant en l'association d'un cation pyrrolidinium et d'un anion nitrate et comprenant un solvant choisi parmi les solvants lactones, les solvants carbonates, les solvants nitriles et les mélanges de ceux-ci.

2. Composition selon la revendication 1, dans laquelle le solvant est un solvant lactone.

3. Composition selon la revendication 1 ou 2, dans laquelle le solvant lactone est choisi parmi la γ-butyrolactone, la β-butyrolactone, la γ-valérolactone, la δ-valérolactone, la γ-caprolactone et les mélanges de ceux-ci.

4. Composition selon l'une quelconque des revendications 1 à 3, dans laquelle le solvant est la γ-butyrolactone.

5. Composition selon l'une quelconque des revendications précédentes, dans laquelle le liquide ionique est présent en une quantité d'au moins 20% massique par rapport à la masse totale de la composition et pouvant aller jusqu'à 80% massique.

6. Composition selon l'une quelconque des revendications précédentes, qui est une composition comprenant :
- un liquide ionique tel que défini à la revendication 1 à hauteur de 50% massique par rapport à la masse totale de la composition ; et
- de la γ-butyrolactone à hauteur de 50% massique par rapport à la masse totale de la composition.

7. Composition selon l'une quelconque des revendications précédentes, qui est un électrolyte.

8. Dispositif à stockage d'énergie comprenant au moins une cellule comprenant une électrode positive et une électrode négative séparées l'une de l'autre par un séparateur comprenant, comme électrolyte, une composition telle que définie selon l'une quelconque des revendications 1 à 7.

9. Dispositif à stockage d'énergie selon la revendication 8, qui est un supercondensateur.

10. Dispositif à stockage d'énergie selon la revendication 8 ou 9, dans lequel l'électrode positive et l'électrode négative sont à base de carbone.

## Patentansprüche

1. Zusammensetzung, umfassend eine ionische Flüssigkeit, bestehend aus einer Vereinigung eines Pyrrolidiniumkations und eines Nitratanions, und umfassend ein Lösungsmittel, ausgewählt aus den Lacton-Lösungsmitteln, Carbonat-Lösungsmitteln, Nitril-Lösungsmitteln und den Gemischen dieser.

2. Zusammensetzung nach Anspruch 1, worin das Lösungsmittel ein Lactonlösungsmittel ist.

3. Zusammensetzung nach Anspruch 1 oder 2, worin das Lactonlösungsmittel ausgewählt ist aus γ-Butyrolacton, ß-Butyrolacton, γ-Valerolacton, δ-Valerolacton, γ-Caprolacton und Gemischen dieser.

4. Zusammensetzung nach einem der Ansprüche 1 bis 3, worin das Lösungsmittel das γ-Butyrolacton ist.

5. Zusammensetzung nach einem der vorhergehenden Ansprüche, worin die ionische Flüssigkeit in einer Menge von mindestens 20 Masse-%, bezogen auf die Gesamtmasse der Zusammensetzung, vorliegt und bis auf 80 Masseprozent gehen kann.

6. Zusammensetzung nach einem der vorhergehenden Ansprüche, die eine Zusammensetzung ist, umfassend:
- eine ionische Flüssigkeit, wie in Anspruch 1 definiert, in einer Höhe von 50 Masse-%, bezogen auf die Gesamtmasse der Zusammensetzung; und
- γ-Butyrolacton in einer Höhe von 50 Masse-%, bezogen auf die Gesamtmasse der Zusammensetzung.

7. Zusammensetzung nach einem der vorhergehenden Ansprüche, die ein Elektrolyt ist.

8. Vorrichtung zur Energiespeicherung, umfassend mindestens eine Zelle, umfassend eine positive Elektrode und eine negative Elektrode, getrennt voneinander durch einen Separator, umfassend als Elektrolyt eine Zusammensetzung, wie in einem der Ansprüche 1 bis 7 definiert.

9. Vorrichtung zur Energiespeicherung nach Anspruch 8, die ein Superkondensator ist.

10. Vorrichtung zur Energiespeicherung nach Anspruch 8 oder 9, worin die positive Elektrode und die negative Elektrode auf Kohlebasis sind.

## Claims

1. A composition comprising an ionic liquid consisting in the combination of a pyrrolidinium cation and of a nitrate anion and comprising a solvent selected from lactone solvents, carbonate solvents, nitrile solvents and mixtures thereof.

2. The composition according to claim 1, wherein the solvent is a lactone solvent.

3. The composition according to claim 1 or 2, wherein the lactone solvent is selected from γ-butyrolactone, β-butyrolactone, γ-valerolactone, δ-valerolactone, γ-caprolactone and mixtures thereof.

4. The composition according to any of claims 1 to 3, wherein the solvent is γ-butyrolactone.

5. The composition according to any of the preceding claims, wherein the ionic liquid is present in an amount of at least 20% by mass based on the total mass of the composition and which may range up to 80% by mass.

6. The composition according to any of the preceding claims, which is a composition comprising:
- an ionic liquid as defined in claim 1 in an amount of 50% by mass based on the total mass of the composition; and
- γ-butyrolactone in an amount of 50% by mass based on the total mass of the composition.

7. The composition according to any of the preceding claims, which is an electrolyte.

8. An energy storage device comprising at least one cell comprising a positive electrode and a negative electrode separated from each other by a separator comprising, as an electrolyte, a composition as defined according to any of claims 1 to 7.

9. The energy storage device according to claim 8, which is a supercapacitor.

10. The energy storage device according to claim 8 or 9, wherein the positive electrode and the negative electrode are based on carbon.
